(19) Europäisches Patentamt
European Patent Office
Office européen des brevets

(11) Publication number: **0 114 746**
**B1**

(12) **EUROPEAN PATENT SPECIFICATION**

(45) Date of publication of patent specification: **19.04.89**

(51) Int. Cl.$^4$: **C 04 B 35/00,** C 08 L 59/00

(21) Application number: **84300317.9**

(22) Date of filing: **19.01.84**

(54) **Polyacetal binders for injection moulding of ceramics.**

(30) Priority: **21.01.83 US 459744**

(43) Date of publication of application:
**01.08.84 Bulletin 84/31**

(45) Publication of the grant of the patent:
**19.04.89 Bulletin 89/16**

(84) Designated Contracting States:
**BE DE FR GB IT NL**

(56) References cited:
**GB-A-1 133 490**
**US-A-4 283 360**

(73) Proprietor: **CELANESE CORPORATION**
**1211 Avenue of the Americas**
**New York New York 10036 (US)**

(72) Inventor: **Farrow, Gerry**
**74 Possum Way**
**New Providence New Jersey (US)**
Inventor: **Conciatori, Anthony B.**
**27 Orchard Road**
**Chatham New Jersey (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

**EP 0 114 746 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a ceramic composition containing a polyacetal binder. The composition is particularly suitable for injection moulding. The present invention also relates to a process of moulding using the described ceramic composition.

It is known in the art that mouldable ceramic compositions may be formed by combining ceramic powders with various binding agents. For example, U.S. Patent 4,071,594 discloses an extrudable ceramic composition comprising ceramic particles and a binding agent. The binding agent is a high molecular weight (at least 400,000) linear chain polyethylene oxide polymer with an organic solvent such as trichloroethylene or ethylene dichloride.

U.S. Patent 4,301,020 and U.S. Patent 4,267,065 describe ceramic compositions incorporating a dispersant to improve the rheological properties of a ceramic slurry. The dispersant comprises ammonium citrate and polyethylenimine.

U.S. Patent 4,180,538 discloses a ceramic composition suitable for extrusion comprising an inorganic raw material powder and a plasticiser which is either a mono-liquid type resin, such as polyvinyl butyral resin, or a hydraulic setting resin mainly consisting of a polyurethane isocyanate prepolymer.

U.S. Patent 3,309,212 relates to a ceramic slurry suitable for moulding comprising ceramic particles distributed in a liquid binder such as ethyl silicate.

U.S. Patent 3,496,256 describes a composition for moulding refractory bodies comprising refractory particles admixed with a binding agent. The refractory particles may be metal oxides such as alumina, zirconia or magnesia. The binding agent is prepolymerised furfuryl alcohol.

U.S. Patent 4,283,360 discloses a process for producing a moulded ceramic which comprises mixing a ceramic powder with both an organic-solvent-soluble resin (for example polystyrene, polyvinyl chloride, polyvinyl acetate, polymethyl methacrylate or cellulose acetate) and an organic-solvent-insoluble resin (preferably polyethylene, isotactic polypropylene or polyvinyl alcohol, although polyacetal is also mentioned), moulding the mixture and firing the moulded product. It is stated (column 4, lines 30—34) that when the soluble resin is less than 30% by weight and the insoluble resin is more than 70% by weight (of the total resin) the disadvantages of the conventional processes are found. It is essential in the process according to this U.S. Patent that, prior to firing, the moulded product is contacted with an organic solvent in order to dissolve out the soluble resin.

In accordance with one aspect, the present invention provides a ceramic composition suitable for injection moulding, which comprises (a) a ceramic powder and (b) a binding agent, the said binding agent being present in an amount of from 15—50% by weight of the composition, and at least 90% by weight of the said binding agent consisting of a polyacetal having the recurring unit

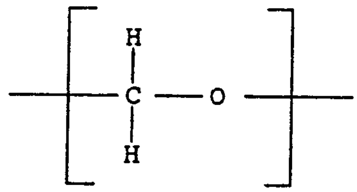

In another aspect, the present invention provides a process of moulding a ceramic composition, whereby moulded articles may be produced, which comprises (a) mixing a ceramic powder with a binding agent to form a ceramic composition according to the present invention, (b) injection moulding the composition, (c) heating the injection moulded composition, and (d) sintering the composition, wherein the said binding agent is removed substantially wholly in the heating step (c).

The invention provides many advantages, among which are the following:

The present invention provides a novel ceramic composition which is superior to the ceramic compositions of the prior art.

The present invention provides an improved ceramic composition suitable for injection moulding.

The present invention provides an improved ceramic composition suitable for injection moulding which contains a binding agent that may be removed from the composition by heating so that it does not leave any defects or weak spots in the moulded article.

The present invention provides an improved ceramic composition suitable for injection moulding which includes a binding agent comprised of a defined polyacetal.

The present invention provides a process of moulding a ceramic composition which includes a binding agent comprised of the defined polyacetal.

The amount of binding agent may vary as desired provided, of course, that the amount is effective to permit injection moulding of the composition.

As stated hereinabove, the present invention relates to a ceramic composition suitable for injection moulding. The ceramic powder employed in the composition is selected according to the designed function of the moulded article as is known to those with skill in the art. Typical ceramic powders include aluminium oxide ($Al_2O_3$), zirconium oxide (preferably calcium oxide — stabilised $ZrO_2$), silicon dioxide (preferably fused $SiO_2$), silicon nitride ($Si_3N_4$), silicon carbide (SiC), silicon, ferrite and mixtures thereof.

To obtain a sintered moulded article which exhibits excellent characteristics, the ceramic powder should be selected and/or treated so that close packing of the powder particles may be obtained. In particular, important factors for particle packing are particle size distribution and the degree of agglomeration. To obtain optimum

packing, a broad distribution of particle sizes is desirable as is well known to those having ordinary skill in the art. For example, an average diameter particle size ratio of at least 7:1 will serve to improve the packing of the particles.

The degree of agglomeration is a function of the size of the individual particles. The smaller the particle size, the greater the surface attraction and strength of electrostatic forces which leads to a higher degree of agglomeration. While the specific particle size employed will depend on the chemical compound selected for the ceramic powder and the function of the moulded article, the average particle size will typically be in the range of from 0.1 to 30 microns, preferably from 0.5 to 5 microns. The shape of the individual particles also affects agglomeration, with spheres yielding the greatest density, cylindrical rods yielding slightly lowered density and dagger-shaped fibres yielding yet lower density.

In the interest of completeness, it should be pointed out here that powder packing is also affected by the particle array. However, since this is principally a random occurrence in the context of the present invention, a further discussion of this factor is not warranted.

In the event that the particles of the available ceramic powder are too large or are of a shape which yields a low packing density, treatment of the powder may lead to improved results. Such treatment may be accomplished through either wet or dry ball milling, jet milling with the particles propelled by gas to promote impact thereof, or other types of milling techniques whereby the particle size is reduced and the particle shape altered. Thus, for example, aluminium oxide available from Alcoa (designated A16SG) may be ball milled with 0.5% oleic acid to reduce the degree of agglomeration. Similarly, milling of needle-shaped particles of silicon nitride will improve the packing density. However, in this instance, care should be taken so that the degree of agglomeration of the milled silicon nitride is not increased to an extent whereby the overall improvement is negligible.

The ceramic composition of the present invention also includes a binding agent. The amount thereof can usually be from 15 to 50%, preferably from 20 to 35%, by weight of the total mixture. The binding agent serves to maintain the integrity of the shaped article prior to sintering. The binding agent of this invention is a polyacetal having the recurring unit

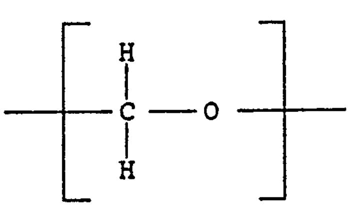

The term "polyacetal" and the recurring unit should be understood to encompass both homopolymers and copolymers which will be discussed in detail below.

The polyacetals employed in the present invention are *per se* known in the art. For example, polyacetals commercially available under the Registered Trade Mark Celcon may be prepared by polymerising anhydrous formaldehyde or trioxane in accordance with the teachings of U.S. Patent 3,027,352.

The polyacetal binding agents of the present invention yield numerous advantages. In particular, since the polyacetals depolymerise through unzipping of the polymer chain, heating causes a uniform evolution of volatiles which removes the polyacetal binding agent without causing disruptions in the structure that might otherwise lead to defects or weak spots in the moulded article. Additionally, the volatile material is a clean-burning fuel that does not leave any undesirable or difficult-to-remove residue. Furthermore, the volatiles resulting from the depolymerisation of the polyacetal are generally not toxic and can be released with little or no treatment.

A yet further significant advantage of the use of polyacetals as the binding agent is that by selecting certain comonomers, copolymer binding agents may be tailored to the specific ceramic powder employed. More specifically, trioxane can be polymerised with ethylene oxide, dioxolane, substituted dioxolanes, trioxepane and 1,4-dioxane in amounts ranging from 20 to 80 mole% of the total comonomers present. Such copolymers can provide a lower melting point, lower crystallinity and increased softness and flexibility. For instance, by copolymerising dioxolane with trioxane in substantially equimolar proportions, a copolymer binding agent which is particularly suitable for aluminium oxide ceramic powder may be obtained.

The binding agent may also comprise small amounts, say from 1.0 to 10%, of known materials which serve an additional binding function. Examples of such materials include low density polyethylene, atactic polypropylene, ethylene vinyl acetate and waxes, e.g. stearic acid and paraffin wax.

In addition to the ceramic powder and the binding agent, the ceramic composition of the present invention may further contain conventional amounts of wetting agents, plasticisers and other types of processing aids which are added to the composition to obtain a suitable rheological system for moulding. Specifically, from 0.5 to 2.0% by weight of wetting agents or surfactants can promote adhesion between the ceramic powder and the binding agent thereby reducing the degree of agglomeration. Suitable wetting agents or surfactants include lignite, mineral oil and low molecular weight waxes. Plasticisers in an amount of from 1.0 to 10% by weight decrease the viscosity of the composite to promote mixing. Typical plasticisers include waxes, silicones, alkyl phthalates, polyalkylene (e.g., polyethylene) glycols and linear saturated polyesters. Mould release agents in an amount of from 0.05 to 1.0% by weight prevent adhesion to the mould wall thereby facilitating removal of the shaped article

from the mould. Typical mould release agents include silicones and various phthalates and amides such as Acrawax C (a fatty acid amide). (Acrawax is a Trade Mark).

To mould the ceramic composition into shaped articles the selected ceramic powder is initially dispersed or mixed in the binding agent. Also present at this time are any additives which are to be included in the composition. Mixing of the ceramic powder, the binding agent and any additives is desirably performed in the absence of oxygen to preclude oxidation of the ceramic powder. This may be achieved by conducting the mixing operation in a vacuum or under an inert atmosphere such as nitrogen or argon.

To obtain a homogeneous mixture, the components of the composition may be first mixed in the substantial absence of shear at a temperature of from room temperature to 200°C for from 5 minutes to 30 minutes. The composition is then sheared in this temperature range for from 5 to 30 minutes. If the mixture has been heated, it is thereafter cooled, while mixing under shear is continued. For example, the temperature is reduced from about 200 to about 170°C. The resulting mixture should desirably have a viscosity of less than 1,000 poise (100 Pa.s) at a shear rate of 1,000 $sec^{-1}$ as measured by a capillary rheometer at a temperature in the range from 100 to 300°C.

The mixture may next be extruded at a die temperature in the range of from 190 to 220°C and a pressure in the range of from 500 to 2000 psig (3550 to 13893 kPa). Extrusion can be achieved by various pieces of equipment known to those of ordinary skill in the art. For example, the equipment may be a twin-screw extruder operating at a die temperature of about 70°C and a pressure of about 1200 psig (8377 kPa).

Alternatively, a mixture-extruder may be employed which intimately mixes the components of the composition in a substantial absence of air and then extrudes the mixture.

Subsequent to the extrusion step, the extrudate is chipped or chopped to obtain pieces of the composition which are in the range of from 1/16 to 1/4 inch (1.6 to 6.4 mm) in maximum dimension. While extrusion and chipping may be eliminated and the composition directly injection moulded, it is preferably extruded and then chipped or chopped into pieces which may be readily fed into a hopper feeder of a conventional injection moulding machine. The chipped composition may then be heated to a temperature from 175 to 200°C and injected at a pressure in the range from 500 to 1000 psig (3550 to 6998 kPa) into a relatively cold mould (i.e. from about room temperature to 70°C) where the composition hardens. Pressure is maintained on the composition until hardening is achieved. Typically, this requires from 20 to 60 seconds.

To remove the binding agent and any volatile additives, the moulded composition may be gradually heated. Although the rate and final temperature will depend on the amount and type of components in the composition and the characteristics of the article, a typical rate of temperature increase will range from 5 to 20°C per hour until a temperature in the range from 20 to 300°C is reached. The selected temperature may then be maintained for from 0.5 to 2.0 hours.

The temperature may then be raised to that required for sintering the ceramic powder. While the rate of final temperature will naturally depend upon the characteristics of the ceramic powder and the shaped article, a rate of temperature increase will generally be in the range from 50 to 1000 degrees per hour until a temperature in the range from 1000 to 1800°C is obtained. To sinter the ceramic powder fully, the shaped article may be held at final temperature for 15 minutes to 8 hours. Sintering is generally undertaken in an atmosphere composed of air or an inert gas. Sintering of the articles generally results in a volumetric reduction of about 15 percent.

By the present invention, various sintered articles may be prepared. Such articles include electrical insulators, furnace elements, crucibles, heat exchange tubes, moulds and cores for metal casting and other applications known to those of ordinary skill in the art.

To obtain a more complete understanding of the present invention, the following Examples of preparing shaped moulded articles are set forth. It should be understood, however, that the invention is not limited to the specific details set forth therein.

Example 1

20 grams of polyacetal (Celcon (Registered Trade Mark) Grade M-9001 having a melting point of about 165°C) is charged into a mixture at 200°C with a slight nitrogen sweep. Sigma blades are rotated at 40 rpm while 75 to 85 grams of aluminium oxide powder (1 micron average diameter) are added.

After 15 minutes, the mixture is removed from the mixer and a 0.08 inch (2.032 mm) strand is extruded under pressure at 200°C (the expression "injection moulding" herein encompassing such an extrusion step). The strand is placed in a furnace and heated to 300°C in about 30 minutes. This effects a quantitative removal of the binder.

Sintering is carried out in a furnace at 1800°C and results in an integral article having acceptable properties.

Example 2

The procedure of Example 1 is repeated with the exception that the binding agent is a copolymer composed of 50 parts of trioxane and 50 parts of dioxolane. The binding agent exhibits a melting point of 140—150°C and hence the mixture containing the ceramic powder can be processed at a lower temperature.

Upon sintering at 1800°C, an acceptable article is again obtained.

## Claims

1. A ceramic composition suitable for injection moulding comprising (a) a ceramic powder and (b) a binding agent, the said binding agent being present in an amount of from 15 to 50% by weight of the composition, characterised in that at least 90% by weight of the said binding agent consists of a polyacetal having the recurring unit

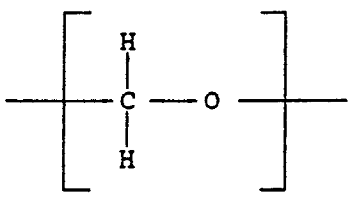

2. The ceramic composition of claim 1, characterised in that the binding agent forms from 20 to 35% by weight of the composition.

3. The ceramic composition of claim 1 or 2, characterised in that the ceramic powder (a) is selected from aluminium oxide, zirconium oxide, silicon dioxide, silicon nitride, silicon carbide, silicon, ferrite and mixtures thereof.

4. The ceramic composition of claim 3, characterised in that the ceramic powder is ferrite.

5. The ceramic composition of any of claims 1 to 4, characterised in that the binding agent (b) further contains a material selected from low density polyethylene, atactic polypropylene, ethylene vinyl acetate, waxes and mixtures thereof.

6. The ceramic composition of any of claims 1 to 4, characterised in that the binding agent consists of the said polyacetal.

7. The ceramic composition of any of claims 1 to 6, characterised in that it further comprises from 0.5% to 2.0% by weight of a wetting agent.

8. The ceramic composition of any of claims 1 to 7, characterised in that it further comprises from 1.0% to 10% by weight of a plasticising agent.

9. A process of moulding a ceramic composition comprising (a) forming a ceramic composition suitable for injection moulding and comprising a ceramic powder and a binding agent, (b) injection moulding the said ceramic composition, (c) heating the injection moulded composition, and (d) sintering the composition, characterised in that the ceramic composition formed in step (a) is according to any one of claims 1 to 8, and in that the said binding agent is removed substantially wholly in the heating step (c).

10. The process of claim 9, characterised in that prior to the injection moulding step, the composition exhibits a viscosity of less than 1000 poise (100 Pa.s) at a shear rate of 1,000 $sec^{-1}$ within a temperature range from 100 to 300°C.

11. The process of claim 9 or 10, characterised in that the binding agent is removed by heating to a temperature in the range from 20 to 300°C for from 0.5 to 2.0 hours.

12. The process of claim 9, 10 or 11, characterised in that the injection moulded composition is sintered at a temperature in the range from 1000 to 1800°C.

13. The process of any of claims 9 to 12, characterised in that the mixture is extruded and chipped prior to being injection moulded.

## Patentansprüche

1. Keramische Zusammensetzung, die für die Spritzguß-Verarbeitung geeignet ist, umfassend (a) ein keramisches Pulver und (b) ein Bindemittel, wobei das Bindemittel in einer Menge von 15 bis 50 Gew.-% der Zusammensetzung vorliegt, dadurch gekennzeichnet, daß wenigstens 90 Gew.-% des Bindemittels aus einem Polyacetal mit den wiederkehrenden Einheiten

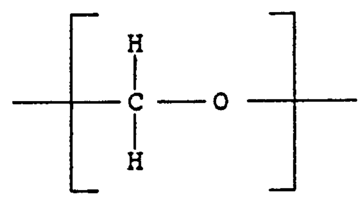

besteht.

2. Keramische Zusammensetzung nach Anspruch 1, dadurch gekennzeichnet, daß das Bindemittel 20 bis 35 Gew.% der Zusammensetzung bildet.

3. Keramische Zusammensetzung nach Anspruch 1 oder 2, dadurch gekennzeichnet, daß das keramische Pulver (a) aus Aluminiumoxid, Zirconiumoxid, Siliciumdioxid, Siliciumnitrid, Siliciumcarbid, Silicium, Ferrit und deren Mischungen ausgewählt ist.

4. Keramische Zusammensetzung nach Anspruch 3, dadurch gekennzeichnet, daß das keramische Pulver Ferrit ist.

5. Keramische Zusammensetzung nach irgendeinem der Ansprüche 1 bis 4, dadurch gekennzeichnet, daß das Bindemittel (b) weiterhin ein aus Polyethylen niederer Dichte, ataktischem Polypropylen, Ethylenvinylacetat, Wachsen und deren Mischungen ausgewähltes Material enthält.

6. Keramische Zusammensetzung nach irgendeinem der Ansprüche bis 1 bis 4, dadurch gekennzeichnet, daß das Bindemittel aus dem Polyacetal besteht.

7. Keramische Zusammensetzung nach irgendeinem der Ansprüche 1 bis 6, dadurch gekennzeichnet, daß sie weiterhin 0,5 bis 2,0 Gew.-% eines Netzmittels enthält.

8. Keramische Zusammensetzung nach irgendeinem der Ansprüche 1 bis 7, dadurch gekennzeichnet, daß sie weiterhin 1,0 bis 10 Gew.-% eines Weichmachers enthält.

9. Verfahren zum Formen einer keramischen Zusammensetzung, umfassend (a) das Bilden einer keramischen Zusammensetzung, die für die Spritzguß-Verarbeitung geeignet ist und ein keramisches Pulver und ein Bindemittel umfaßt, (b) das Spritzgießen der keramischen Zusammensetzung, (c) das Erhitzen der spritzgußgeformten

Zusammensetzung und (d) das Sintern der Zusammensetzung, dadurch gekennzeichnet, daß die in Schritt (a) gebildete keramische Zusammensetzung eine solche nach irgendeinem der Ansprüche 1 bis 8 ist und das Bindemittel in dem Schritt des Erhitzens (c) im wesentlichen vollständig entfernt wird.

10. Verfahren nach Anspruch 9, dadurch gekennzeichnet, daß vor dem Schritt des Spritzgießens die Zusammensetzung eine Viskosität von weniger als 1000 Poise (100 Pa.s) bei einer Scherrate von 1 000 $s^{-1}$ innerhalb eines Temperaturbereichs von 100°C bis 300°C aufweist.

11. Verfahren nach Anspruch 9 oder 10, dadurch gekennzeichnet, daß das Bindemittel durch Erhitzen auf eine Temperatur im Bereich von 20°C bis 300°C während einer Zeitdauer von 0,5 bis 2,0 h entfernt wird.

12. Verfahren nach Anspruch 9, 10 oder 11, dadurch gekennzeichnet, daß die spritzgußgeformte Zusammensetzung bei einer Temperatur im Bereich von 1000°C bis 1800°C gesintert wird.

13. Verfahren nach irgendeinem der Ansprüche 9 bis 12, dadurch gekennzeichnet, daß die Mischung vor dem Spritzgießen extrudiert und geschnitzelt wird.

**Revendications**

1. Composition céramique appropriée pour le moulage par injection comprenant (a) une poudre de céramique et (b) un agent liant, ledit agent liant étant présent en une quantité comprise entre 15 et 50% en poids de la composition, caractérisée en ce qu'au moins 90% en poids dudit agent liant se compose d'un polyacétal ayant l'unité récurrente

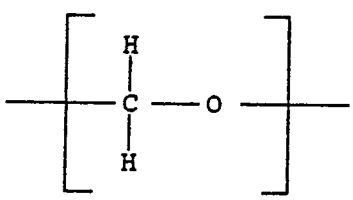

2. Composition céramique selon la revendication 1, caractérisée en ce que l'agent liant forme 20 à 35% en poids de la composition.

3. Composition céramique selon la revendication 1 ou 2, caractérisée en ce que la poudre de céramique (a) est choisie parmi l'oxyde d'aluminium, l'oxyde de zirconium, le bioxyde de silicium, le nitrure de silicium, le carbure de silicium, le silicium, la ferrite et leurs mélanges.

4. Composition céramique selon la revendication 3, caractérisée en ce que la poudre de céramique est la ferrite.

5. Composition céramique selon l'une quelconque des revendications 1 à 4, caractérisée en ce que l'agent liant (b) contient de plus une matière choisie parmi le polyéthylène basse densité, le polypropylène atactique, de l'acétate de vinyleéthylène, des cires et leurs mélanges.

6. Composition céramique selon l'une quelconque des revendications 1 à 4, caractérisée en ce que l'agent liant se compose dudit polyacétal.

7. Composition céramique selon l'une quelconque des revendications 1 à 6, caractérisée en ce qu'elle contient de plus 0,5% à 2,0% en poids d'un agent mouillant.

8. Composition céramique selon l'une quelconque des revendications 1 à 7, caractérisée en ce qu'elle contient de plus 1,0% à 10% en poids d'un agent plastifiant.

9. Procédé de moulage d'une composition céramique consistant à (a) former une composition céramique appropriée au moulage par injection et comprenant une poudre de céramique et un liant, (b) mouler par injection ladite composition céramique, (c) chauffer la composition moulée par injection, et (d) fritter la composition, caractérisé en ce que la composition céramique formée à l'étape (a) est selon l'une quelconque des revendications 1 à 8 et en ce que ledit agent liant est sensiblement totalement éliminé dans l'étape de chauffage (c).

10. Procédé selon la revendication 9, caractérisé en ce qu'avant l'étape de moulage par injection, la composition présente une viscosité de moins de 1000 poises (100 Pa.s) à un taux de cisaillement de 1 000 $s^{-1}$ dans une plage de températures de 100 à 300°C.

11. Procédé selon la revendication 9 ou 10, caractérisé en ce que l'agent liant est éliminé par chauffage à une température comprise entre 20 et 300°C pendant 0,5 à 2,0 heures.

12. Procédé selon la revendication 9, 10 ou 11, caractérisé en ce que la composition moulée par injection est frittée à une température comprise entre 1000 et 1800°C.

13. Procédé selon l'une quelconque des revendications 9 à 12, caractérisé en ce que le mélange est extrudé et haché avant d'être moulé par injection.